# EUROPÄISCHE PATENTSCHRIFT

(11) **EP 0 438 974 B1**
(45) Veröffentlichungstag und Bekanntmachung des Hinweises auf die Patenterteilung: **28.07.1993**
(21) Anmeldenummer: 90810993.7
(22) Anmeldetag: 17.12.1990
(51) Int. Cl.: B65B 19/34, B65B 5/10, B65B 35/04

(54) **Verfahren zum Abpacken von Hülsen oder Tuben in Schachteln, sowie Maschine zur Durchführung des Verfahrens**
Method for packaging sleeves or tubes in boxes, and machine for executing the method
Procédé pour l'emballage de manchons ou de tubes dans des boîtes, ainsi que machine pour la mise en oeuvre du procédé

(30) Priorität: 25.01.1990 CH 233/90; 14.12.1990 CH 3971/90
(43) Veröffentlichungstag der Anmeldung: 31.07.1991
(73) Patentinhaber: PAMAG AG, CH-8890 Flums (CH)
(72) Erfinder: Benz, Gottlieb, CH-8890 Flums (CH)
(74) Vertreter: Feldmann, Clarence Paul

(56) Entgegenhaltungen:
- FR-A- 2 261 183
- GB-A- 1 274 222
- US-A- 3 479 795

## Beschreibung

Auf dem Weltmarkt werden zwei unterschiedliche Maschinentypen angeboten, die nach unterschiedlichen Verfahren arbeiten. Prinzipiell gelangen mehr oder weniger kontinuierlich leere Tuben oder Hülsen von einer Produktionsstrasse, in der sie gefertigt und bedruckt wurden zu einer Maschine, in der diese in Schachteln verpackt werden und danach hierin zu den Abfüllfirmen spediert werden.

In einem bekannten Verfahren gelangen die Tuben oder Hülsen von einer Abgabetrommel auf einer Rutsche oder einem Schrägblech, von dem aus sie auf ein Förderband mit Teilungslamellen gelangen. Dieses Band läuft kontinuierlich bis vor einem Abstosser die gewünschte Anzahl Hülsen oder Tuben liegt. Nun wird das Band angehalten und eine Charge der Tuben oder Hülsen in eine Hilfsform oder direkt in die Schachtel geschoben, wobei die Anzahl der Tuben der Größe der Schachtel angepasst ist.

Im anderen bekannten Verfahren werden die von der Produktionsstrasse kommenden Hülsen über eine Abgabetrommel auf ein endloses Band aus hintereinander gereihten Schalen abgegeben. Die Tuben in den Schalen werden auf ein flaches Förderband gekippt und mittels darüber angeordneten Bürsten gehalten und zusammengeschoben bis die korrekte Anzahl der Tuben für eine Schicht erreicht ist, worauf wiederum die Tuben senkrecht zur Bewegungsrichtung des Bandes mittelbar oder direkt in die Schachtel geschoben werden.

Es ist auch ein Verfahren bekannt, bei dem zwischen der Produktionsstrasse, welche kontinuierlich Zigaretten liefert und der Verpackungsstation ein "Zwischenspeicher" angeordnet ist. Der Zwischenspeicher erlaubt die Verpackung Aufrechterhaltung des Verpackungsprozesses, wenn die Produktions auslage kurzzeitig ausfällt.

Beide erstgenannten Systeme haben ihre Vor- und Nachteile.

Beim erstbeschriebenen Verfahren werden die Tuben und Hülsen zwar schonend behandelt, doch bedingt ein Wechsel der Tubengrösse eine Umrüstarbeit vom mindestens einer halben Stunde. Hier muss insbesondere das gesamte Band mit der Lamelleneinteilung ausgewechselt werden. Neben dem Zeitaufwand kommt auch noch ein erheblicher Kostenaufwand hinzu, der durch die verschiedenen, speziell gefertigten Bänder verursacht wird.

Die andere Variante ist für beliebige Tubengrössen einsetzbar. Lediglich die Höhe der Bürste über dem Förderband muss an den Durchmesser der Tuben oder Hülsen angepasst werden. Problematisch ist hier jedoch, dass die Führung der Tuben auf dem flachen Förderband unsicher ist. Ist eine Tube kopflastig, so verdreht sie sich und kann damit die Ordnung aller nachfolgenden Tuben durcheinander bringen. Ein weiterer Nachteil wird darin gesehen, dass die auf dem Flachband transportieren Rollen oder Hülsen aneinander reiben und sich dadurch leicht verkratzen. Und schliesslich besonders nachteilig erwies sich die Lösung bei Tuben oder Hülsen aus Kunststofflaminate, die sich bei der Reibung unter der Bürste derart aufladen können, dass sie aneinander haften bleiben oder völlig deformieren.

Es ist daher die Aufgabe der vorliegenden Erfindung, ein Verfahren und eine nach dem Verfahren arbeitende Maschine zu schaffen, bei der die vorgenannten Nachteile vermieden werden können. Diese Aufgabe lösen Verfahren nach den Ansprüchen 1 und 2, sowie eine nach den Verfahren arbeitende Maschine nach Anspruch 6.

In der anliegenden Zeichnung ist ein Ausführungsbeispiel der nach dem erfindungsgemässen Verfahren arbeitenden Maschine dargestellt und anhand dessen, das Verfahren nachfolgend beschrieben. Es zeigt:
- Figur 1: die Förderstrecke der Tuben oder Hülsen von der Abgabestelle des Kompensators bis zur Abfüllung in die Schachtel;
- Figur 2: eine schematische Darstellung des Kompensators;
- Figur 3: einen Seitenaufriss der gesamten Maschine und
- Figur 4: eine schematische Darstellung der Abgabe der Tuben oder Hülsen vom Kompensator auf das Blech des Schlittens.

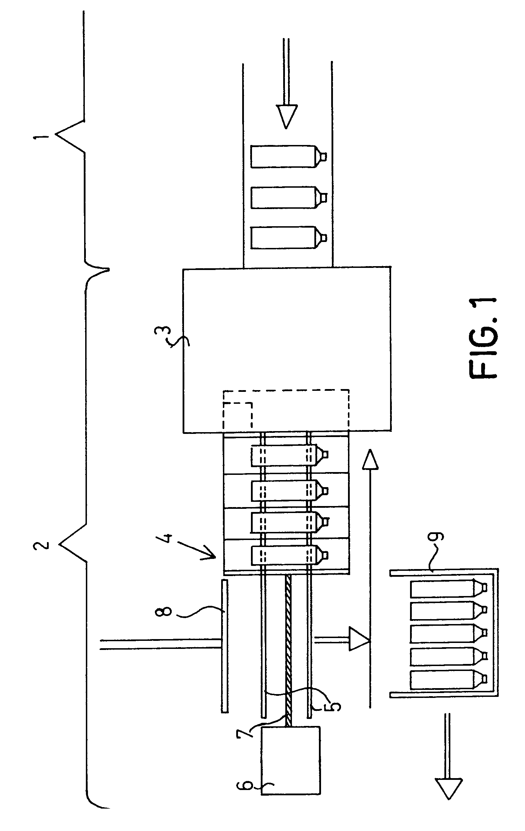

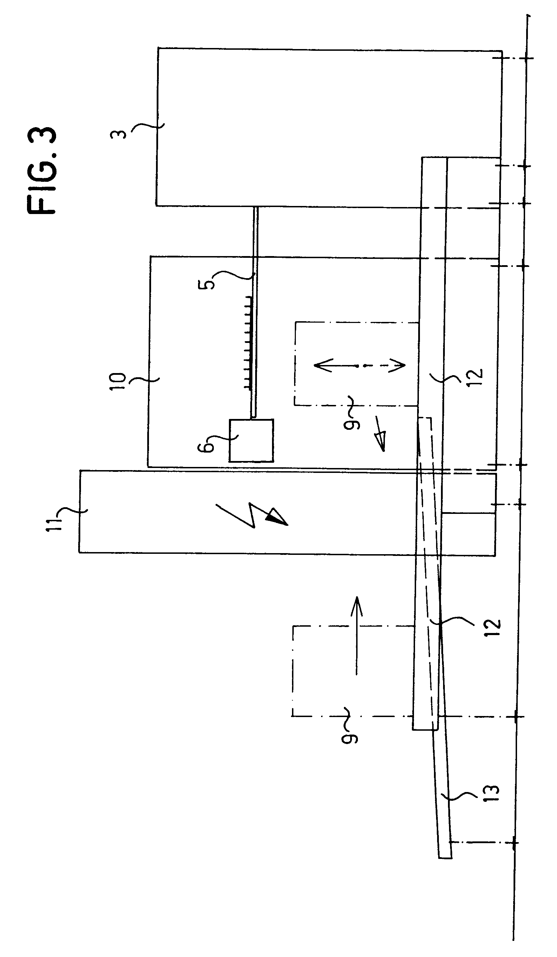

Anlagen zur Fertigung von Tuben sind ausserordentlich kostspielige Grossanlagen, die möglichst ohne Unterbrechung und mit voller Kapazität betrieben werden müssen. Ein intermitierender Betrieb ist weder wünschenswert noch möglich. In Figur 1 sind die von der Produktionsanlage 1 kontinuierlich ankommenden Tuben oder Hülsen in der Zeichnung rechts erkennbar. Die Zuführung auf einem Förderband wie hier dargestellt, hat selbstverständlich nur Symbolcharakter. Die eigentliche Tubenabpackmaschine ist gesamthaft in Figur 1 mit der Bezugszahl 2 bezeichnet und in Figur 3 nochmals in Seitenansicht dargestellt. Die Hauptbaugruppen der Abpackmaschine sind der Kompensator 3, der Schachtelförderer 10, sowie die elektronische Steuerung 11. Die von der Produktionsanlage kontinuierlich kommenden Hülsen oder Tuben werden somit an den Kompensator abgegeben, von wo aus sie zum Schachtelförderer (10) transportiert werden und in diesem schichtweise gruppiert in die Schachteln 9 geschoben werden. Sowohl Kompensatoren wie auch Schachtelförderer sind an sich bekannt. Gegenstand der vorliegenden Erfindung ist die Förderung der Tuben oder Hülsen vom Kompensator 3 zum Schachtelförderer 10 und von hier in die Schachtel 9. Die Schachtel 9 wird auf einem Förderband 12 in den Schachtelförderer 10 transportiert und hier entsprechend hochgehoben, so dass die Tuben schichtweise in die Schachtel 9 geschoben werden können, worauf die Schachtel um die Höhe einer Schicht abgesenkt wird und die nächste Schicht Tuben eingeschoben werden kann. Ist die Schachtel 9 vollständig gefüllt, so wird sie zur Seite geschoben und gleitet auf der Rollenbahn 13 zur Spedition.

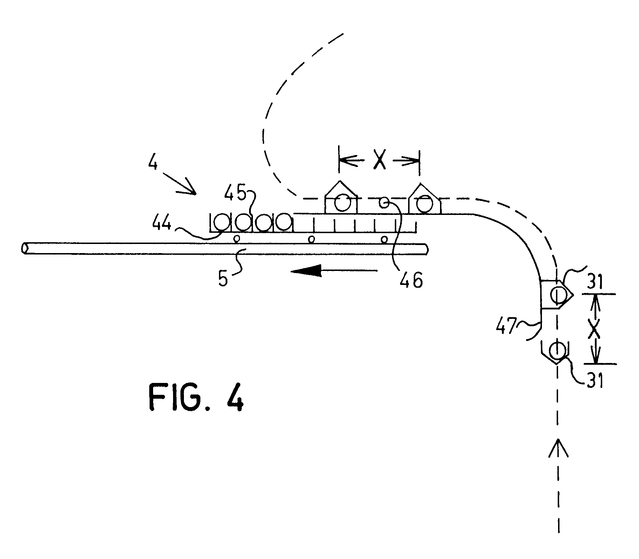

Zur Förderung der Tuben oder Hülsen vom Kompensator 3 in die Schachtel 9, ist ein Fördermittel in Form eines Schlittens 4 vorgesehen. Der Schlitten 4 rollt auf Schienen 5, die sich mindestens vom Kompensator 3 bis in den Bereich erstrecken, in dem die Tuben vom Schlitten 4 in die bereitstehende Schachtel 9 geschoben werden. Dies bewerkstelligt der quer zur Bewegungsrichtung des Schlittens 4 gerichtete Querschieber 8. Der Schlitten 4, der auf den Schienen 5 rollt, wird von einem Schrittmotor 6 über eine Spindel 7 bewegt. Der Schrittmotor könnnte selbstverständlich auch über einen Zahnriemen den Schlitten 4 nach Massgabe des Steuerprogrammes hin- und herbewegen. In einem Takt, der schneller ist als der Takt, indem die Tuben oder Hülsen kontinuierlich von der Produktionsanlage kommen, wird der Schlitten 4 schrittweise bewegt. Der Weg des Schlittens pro Schritt entspricht der Einteilung 45 des Bleches 44 (siehe Figur 4). Ist auf dem Blech 44 die erforderliche Anzahl Tuben abgelegt, die zur Bildung einer Schicht erforderlich ist, so wird der Kompensator 3 im Bereich seiner Abgabestelle 38 gestoppt und der Schlitten 4 bewegt sich soweit zur Seite, dass er auf die Schachtel 9 ausgerichtet ist und die Tuben oder Hülsen mittels dem Querschieber 8 vom Blech 44 hinuntergeschoben werden können. Hierauf wird der Schlitten 4 auf den Schienen 5 wiederum vollständig nach rechts verschoben, so dass der nächsten Abgabe einer Tube oder Hülse vom Kompensator die weitest links liegende Einteilung 45 gefüllt wird und nun wiederum der Schlitten schrittweise nach links verschoben werden kann.

Die direkte Einschiebung der Tuben in die Schachtel 9 ist eine besonders preiswerte Möglichkeit, bedingt jedoch eine gute Karton Qualität. Will man jedoch mit einer maximalen Kadenz arbeiten, so darf auch die Zeit zur Auswechslung der Schachtel 9 nur sehr kurz sein. Dies lässt sich erreichen, indem man die Tuben nicht direkt in die Schachtel schiebt, sondern erst auf einen Zwischenträger, der alle Tuben miteinander, die einer Schachtelfüllung entsprechen, in die Schachtel schiebt. Während dieser Zeit werden die Tuben auf einen Hilfszwischenträger geschoben bis der Hauptzwischenträger wieder frei ist, worauf die auf dem Hilfszwischenträger liegenden Tuben auf den Hauptzwischenträger abgegeben werden. Dieses System ist bereits aus der Schweizer Patentschrift Nr. 658'632 bekannt und hierin ausführlich beschrieben.

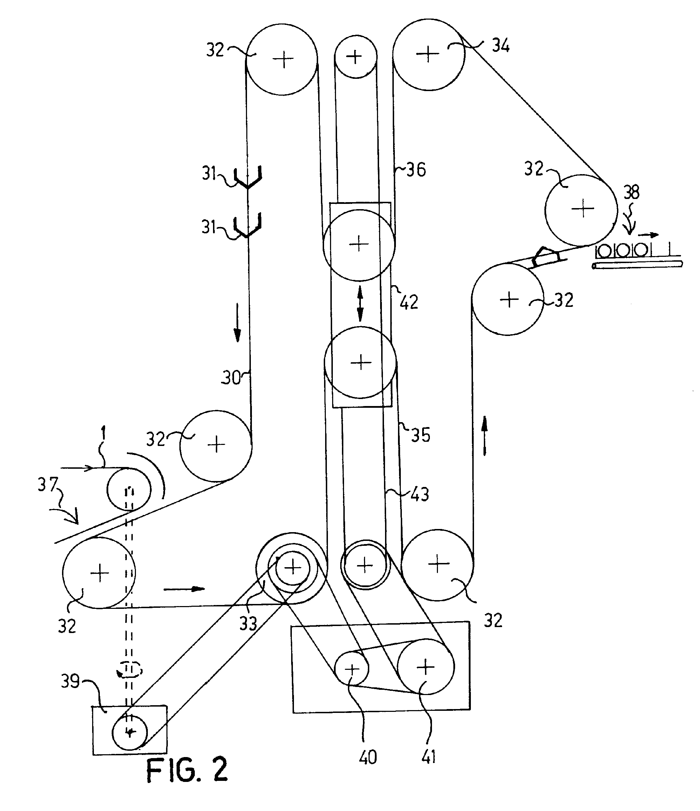

Eine eminente Bedeutung bekommt bei diesem Verfahren der Kompensator. Daher ist ein für diese Maschine besonders bevorzugter Kompensator in Figur 2 dargestellt. Im Wesentlichen besteht der Kompensator aus zwei parallelen, gleichlaufenden, endlosen Ketten 30 zwischen denen Gondeln 31 angelegt sind. Die Gondeln 31 dienen dem Transport der Hülsen oder Tuben. In der Zeichnung sind lediglich einige Gondeln 31 dargestellt, während in Wirklichkeit dicht aneinander gereiht eine Gondel der andern Gondel folgt. Die über Umlenkrollen 32 laufenden Ketten 30 werden von einer Antriebswalze 33 bewegt. In der Figur ganz links ist die Ladestelle 37, an der die von der Produktionsanlage kommenden Tuben oder Hülsen in die Gondeln 31 abgegeben werden. Hier muss die Kette 30 kontinuierlich und synchron mit dem Förderband der Produktionsanlage laufen. Nur so ist gesichert, dass sämtliche von der Produktion kommenden Tuben ohne Unterbrechung abgenommen werden können. Diese Synchronisation der Geschwindigkeit wird erreicht durch einen Synchron-Antrieb 39, der direkt an die Produktionslinie mechanisch gekoppelt ist. Von der Ladestelle 37 laufen die Gondeln 31 abwärts bis zum tiefsten Punkt, worauf die Kette 30 in einer ersten Schlaufe 35 aufwärts und wieder abwärts bis zum tiefsten Punkt geführt wird von wo zur Abgabestelle 38 geleitet wird. Dieser Bereich ist in Figur 4 deutlich dargestellt. Von der Abgabestelle 38 läuft die endlose Kette 30 über eine Bremswalze 34 bis zum höchsten Punkt und wird von dort wiederum abwärts und danach wieder aufwärts in Form einer zweiten Schlaufe geführt. Am Ende der zweiten Schlaufe wird die endlose Kette 30 wieder abwärts zur Ladestelle 37 und dann über die Antriebswalze 33 geführt. Die beiden Schlaufen 35 und 36 werden über Umlenkrollen geführt, die auf einem auf- und abfahrbaren Rahmen 42 angeordnet sind. Dieser fahrbare Rahmen 42 wird mittels einer Kette 43, die am Rahmen 42 befestigt ist und über eine obere Umlenkrolle und eine untere Antriebsrolle läuft, bewegt. Der Antrieb dieser Kette 43 erfolgt passiv durch die Kupplungseinheit 40 und die Bremseinheit 41, die zeitlich gegengleich zur Bremse 34 arbeitet.

Im Takt der ankommenden Gondeln 31 wird der Schlitten 4 bewegt und die Tuben oder Hülsen an der Abgabestelle 38 auf das vorherbeschriebene Blech 44 abgelegt. Ist der Schlitten beziehungsweise das Blech 44 mit der erforderlichen Anzahl Tuben gefüllt, so muss die Abgabe der Tuben kurzfristig gestoppt werden. Hierzu wird die Bremswalze 34 angehalten. Die kontinuierlich laufende Antriebswalze 33 läuft jedoch weiter. Somit wird die Schlaufe 36 in der lauter leere Gondeln 31 sind, verkürzt. An der Ladestelle 37 läuft die Kette 30 somit kontinuierlich weiter. In gleichem Masse wie die Schlaufe 36 verkürzt wird, läuft der Rahmen 42 freilaufend aufwärts und die Schlaufe 35 wird entsprechend vergrössert. Ist das Blech 44 geleert und der Schlitten 4 wieder in seine Ausgangsposition zurückgebracht, so darf die Kette im Abgabebereich 38 wieder laufen, das heisst die Bremswalze 34 darf wieder gelöst werden. Nun ist aber die Schlaufe 35 mit lauter gefüllten Gondeln 31 gross und die Schlaufe 36 mit leeren Gondeln klein. Beim nächsten Stop der Kette 30 an der Abgabestelle 38 wäre die Schlaufe 36 vermutlich zu kurz, das heisst es wären nicht genügend leere Gondeln vorhanden, die zwischenzeitlich an der Ladestelle 37 gefüllt werden können. Daher wird die Bremseinheit 41 angesteuert, die den fahrbaren Rahmen 42 über die Kette 43 wieder in seine untere Ausgangslage zieht. Dies bedeutet, dass zur kontinuierlichen Antriebsgeschwindigkeit an der Antriebswalze 33 noch eine zusätzliche Geschwindigkeitskomponente an der Abgabestelle 38 auftritt, die der Verkürzung der Schlaufe 35 entspricht. Auf diese Art kann bei der Ladestelle 37 ein kontinuierlicher Betrieb und an der Abgabestelle 38 ein intermitierender Betrieb sichergestellt werden. Die unterschiedliche Abgabegeschwindigkeit der Tuben auf das Blech 44 des Schlittens 4 bedingt, dass der Schlitten 4 nach Massgabe der Geschwindigkeit der endlosen Kette 30 im Bereich der Abgabestelle bewegt wird. Der Schrittmotor 6, der über die Spindel 7 oder Zahnriemen den Schlitten 4 bewegt, muss folglich nach Massgabe der Geschwindigkeit der Umlenkwalze 32 im Bereich der Abgabestelle 38 getaktet werden. Daher wird dessen Drehgeschwindigkeit elektronisch abgetastet und in der elektronischen Steuerung 11 ausgewertet und entsprechende Steuerimpulse an den Schrittmotor 6 geliefert.

Die auf der Produktionsanlage gefertigten Tuben oder Hülsen werden vollautomatisch geprüft, und falls sie nicht den Erfordernissen entsprechen, ausgestossen. Dies bedeutet, dass nicht jede zur Abgabestelle 38 gelangende Gondel 31, auch mit einer Tube gefüllt ist. Dies muss erst elektronisch festgestellt werden, damit auf dem Blech 44 nicht eine Einteilung 45 leer bleibt. In der Figur 4 ist gezeigt, wie dies geschieht. Die in Abständen X nacheinander ankommenden Gondeln 31 stossen an ein Führungsblech 47, wodurch die Gondeln 31 um 90°gekippt werden, aber gleichzeitig die darin lagernden Tuben oder Hülsen gegen ein Herausgleiten schützt, da die Gondeln 31 nun durch das Führungsblech 47 abgedeckt sind. Ueber das Führungsblech 47 gleitend werden die Gondeln über den Bereich der Schienen 5 geführt, auf denen der Schlitten 4 rollt. Der unter das Führungsblech 47 schiebbare Schlitten 4 mit seinem Blech 44 wird nun schrittweise entsprechend der Einteilung 45 soweit unter dem Führungsblech 47 herausgezogen, dass immer die nächstfolgende Tube oder Hülse am Ende des Führungsbleches aus der Gondel 31 in die freie Einteilung 45 des Bleches 44 fällt.

Das Vorhandensein einer Tube oder Hülse der Gondel 31 wird mittels einer Fotozelle 46 geprüft. Da die Gondeln oder Schalen 31 für alle Tuben- oder Hülsengrösssen gleich ist, können kleinere Tuben innerhalb der Gondel 31 hin- und herrollen. Dies könnte zu Mehrfach-Schaltungen führen. Um dies zu vermeiden, wird auch die Fotozelle 46 im Rhythmus der ankommenden Gondeln 31 getaktet. Innerhalb einer Taktzeit kann die Fotozelle nur einmal schalten. Damit sind unerwünschte Fehlschaltungen ausgeschlossen.

Das erfindungsgemässe Verfahren und die danach arbeitende Maschine erlaubt nun eine hohe Flexibilität. Wird zum Beispiel die Grösse der Tube in der Produktionsanlage geändert, so muss nun lediglich das Blech 44 auf dem Schlitten ausgewechselt werden durch ein anderes Blech 44 mit einer der neuen Tubengrösse angepassten Einteilung 45. Die weiteren Aenderungen, die sich hieraus ergeben, wie Beispiel die Zahl der Tuben pro Schicht und den seitlichen Verschiebungsweg des Schlittens 4 lassen sich über eine Progammsteuerung eingeben. Die gesamte Aenderung der Maschine auf das geänderte Format, ist somit eine Sache von wenigen Minuten. Aber auch die Aenderung des Schachtelformates bei gleichbleibender Grösse der Tuben ist überhaupt kein Problem mehr. Die entsprechenden Aenderung können direkt in die Programmsteuerung eingegeben werden. Entsprechend wird einfach das Blech 44 mit mehr oder wenig Tuben belegt. Der seitliche Verschiebungsweg wird entsprechend dem neuen Schachtelformat angepasst. Ferner kann mit dieser neuen Maschine auch wechselweise die Anzahl der Tuben pro Schicht um jeweils eine Tube geändert werden, wodurch die dichteste Tubenpackung in der Schachtel ermöglicht wird. Auch dies ist lediglich eine Sache der Progammierung. Eine derartige Schichtung der Tuben oder Hülsen war mit den bisherigen Abpackmaschinen nicht erreichbar.

Um die Taktzeit der Maschine zu erhöhen, ist es auch möglich mit zwei Schlitten zu arbeiten. Jeder Schlitten ist dann einseitig an einer Schiene gelagert gehalten und beispielsweise mit einem Hubzylinder ausgerüstet. So ist es möglich, den ersten Schlitten zur Seite zu fahren und den zweiten Schlitten, wie zuvor beschrieben, zu beladen. Der erste Schlitten wird, wie bisher entladen und wird darauf mit dem Hubzylinder abgesenkt, so dass er unter den zweiten Schlitten, der sich nun auf der oberen Ebene bewegt, hindurch zu fahren. Am Ende im Bereich der Abgabestation wartet er nun unterhalb des zweiten Schlitten bis dieser beladen zur Seite fährt. Nun wird der erste Schlitten wieder hochgehoben in seiner ursprünglichen Ausgangslage bei der Abgabestation. Auf diese Weise kann die Taktzeit verkürzt, das Verfahren somit beschleunigt und zudem der Kompensator verkleinert werden, der nun eine kleinere Pufferzeit überbrücken muss. Eine solche Maschine kann auch mit zwei Schlitten nach dem Verfahren mit einem Schlitten betrieben werden, was dann sinnvoll ist, wenn mit derselben Maschine zwei verschiedene Hüllen-, Dosen- oder Tubengrössen abwechseln verarbeitet werden müssen, ohne dass man jedesmal die Maschine umrüsten will.

## Patentansprüche

1. Verfahren zum Abpacken von kontinuierlich von einer Produktionsanlage (1) kommenden Hülsen oder Tuben in Schachteln (9), wobei die Hülsen oder Tuben jeweils entsprechend der gewünschten Anzahl einer Schicht gruppiert werden und von einem Schieber (8) in die Schachtel (9) geschoben werden, dadurch gekennzeichnet, dass die Tuben oder Hülsen von der kontinuierlichen Zuführung (1)zuerst in einen Kompensator (3) gelangen, aus dem sie an der Abgabestelle (38) opto-elektronisch überwacht schrittweise auf einen Schlitten (4) abgegeben werden, der eine Anzahl Hülsen oder Tuben entsprechend einer Schicht fasst, worauf der Kompensator (3) an seiner Abgabestelle (38) angehalten wird, während er an seiner Ladestelle (37) kontinuierlich weiterläuft, und dass während der Haltezeit an der Abgabestelle der Schlitten (4) zur Seite fährt und ein Schieber (8) die Tuben vom Schlitten quer zu seiner Bewegungsrichtung mittel- oder unmittelbar in eine Schachtel (9) abschiebt, die daraufhin um die Höhe einer Tubenschicht abgesenkt wird, während gleichzeitig der Schieber (8) zurückgezogen und der Schlitten (4) zurückgefahren wird, worauf der Kompensator (3) an der Abgabestelle (38) mit erhöhter Geschwindigkeit wieder zu laufen beginnt.

2. Verfahren zum Abpacken von kontinuierlich von einer Produktionsanlage (1) kommenden Hülsen, Dosen, Tuben oder andere zylinderähnliche Teile in Schachteln (9), bei dem die ankommenden Tuben oder Hülsen zu Gruppen geordnet werden, welche jeweils einer Schicht der zu packenden Schachtel entspricht, worauf diese nacheinander zur Füllöffnung der Schachtel gebracht werden und dort von einem Schieber in die Schachtel geschoben werden, dadurch gekennzeichnet, dass die Tuben oder Hülsen von der kontinuierlichen Zuführung (1) in einen Kompensator (3) gelangen, von dem sie opto-elektronisch überwacht schrittweise auf mindestens einen Schlitten (4) abgegeben und entsprechend der gewünschten Anzahl einer Schicht gruppiert werden, worauf der Kompensator (3) an der Abgabestelle (38) angehalten wird, während er an der Ladestelle (37) kontinuierlich weiterläuft, und dass während der abgabeseitigen Haltezeit des Kompensators der mindestens eine beladene Schlitten (4) zur Seite fährt, während ein weiterer Schlitten an die Abgabestelle gelangt, worauf der Kompensator (3) an der Abgabestelle (38) mit erhöhter Geschwindigkeit wieder zu laufen beginnt, und dass vom erstbeladenen Schlitten ein Schieber (8) die Tuben vom Schlitten quer zu seiner Bewegungsrichtung mittel- oder unmittelbar in eine Schachtel (9) abschiebt, die daraufhin um die Höhe einer Tubenschicht abgesenkt wird, während gleichzeitig der Schieber (8) zurückgezogen und der entleerte Schlitten (4) zurückgefahren wird und in einer Warteposition verbleibt bis der gefüllte zweite Schlitten zur Seite fährt.

3. Verfahren nach Anspruch 1 oder 2, dadurch gekennzeichnet, dass der Schlitten (4) in Takt der ankommenden Hülsen oder Tuben schrittweise bewegt wird, wobei nur bei Vorhandensein einer Hülse oder Tube am Transportplatz ein Vorschubbefehl an den Schlittenantrieb (6) erfolgt.

4. Verfahren nach Anspruch 1 oder 2, dadurch gekennzeichnet, dass die Anzahl der auf den Schlitten (4) zu füllenden Plätze und der seitliche Verschiebungsweg des Schlittens nach Massgabe der Schachtelgrösse ermittelt wird und über eine Programmsteuerung erfolgt.

5. Verfahren nach Anspruch 2, dadurch gekennzeichnet, dass jeweils ein Schlitten von der Abgabestation in einer oberen Ebene zur Seite fährt und abgeladen wird und auf einer unteren Ebene zurück in die Warteposition führt.

6. Maschine zur Durchführung des Verfahrens nach einem der Ansprüche 1 oder 2 mit einem Kompensator (3), der kontinuierlich mit Hülsen oder Tuben ladbar ist und diese diskontinuierlich an mindestens ein Fördermittel abgibt, welches die Hülsen oder Tuben in den Bereich einer Schachtel (9) bringt, wo die Hülsen oder Tuben von einem Schieber (8) schichtweise in die Schachtel geschoben werden, dadurch gekennzeichnet, dass der Kompensator (3) eine endlose Kette (30) mit gondelartig daran befestigten Schalen (31) aufweist, wobei die Kette (30) zwei Schlaufen (35,36) hat, wovon die eine (35) im Bereich zwischen der Abgabestelle (38) bis zur Ladestelle (37) und die zweite Schlaufe (36) zwischen der Ladestelle (37) und der Abgabestelle (38) angeordnet ist, und dass im Bereich zwischen der zweiten Schlaufe (36) und der Abgabestelle (38) die Kette (30) um eine nach Massgabe der Schlittenbewegung bremsbare Trommel (34) geführt ist, während die Kette (30) ladeseitig im Bereich zwischen den beiden Schlaufen (35,36) von einem Motor (39) mit einer zur Produktionslinie synchronen Geschwindigkeit angetrieben ist, und dass ferner beide Schlaufen (35,36) um je eine Umlenkrolle geführt sind, die gemeinsam auf einen fahrbaren Rahmen (42) angeordnet sind, der von einer Bremseinheit (41) mit elektrischer Kupplungseinheit (40) jeweils in seine Ausgangslage zurückziehbar ist, und dass das Fördermittel mindestens ein Schlitten (4) mit einem darauf auswechselbar befestigten Blech (44) ist, welches der Grösse und Anzahl der zu fördernden Tuben oder Hülsen angepasste Teilung (45) aufweist, und dass der Schlitten (4) mittels eines nach Massgabe einer elektronischen Steuerung (11) arbeitenden Schrittmotors (6) hin und zurück bewegbar ist.

7. Maschine nach Anspruch 6, dadurch gekennzeichnet, dass vor dem Uebergabebereich der Tuben oder Hülsen auf das Blech (44) des Schlittens eine Fotozelle (46) angebracht ist, die für jede ankommende Tube ode Hülse einen Schalt- und Zähl-impuls auf eine mit der Steuerung (11) verbundene Programmschaltung gibt.

8. Maschine nach Anspruch 6, dadurch gekennzeichnet, dass das auswechselbare Blech (44) mit Einteilung (45) über mindestens zwei Positionierungsstifte und mittels mindestens einer Befestigungsschraube auf den Schlitten (4) gehalten ist.

9. Maschinen nach Anspruch 6 zur Ausübung des Verfahrens nach Anspruch 2, dadurch gekennzeichnet, dass zwei Schlitten vorhanden sind, die je an einer von zwei parallelen Schienen einseitig gelagert sind und mit Mitteln zur Höhenveränderung versehen sind.

## Claims

1. A method of packing cylinders or tubes which arrive continuously from a production plant (1) into cartons (9), the cylinders or tubes being in each case grouped in accordance with a desired number in a layer and being pushed into the carton (9) by a pusher (8), characterised in that the tubes or cylinders pass from the continuous feed means (1) firstly into a compensator (3) from which they are delivered at the delivery station (38) under optoelectronic supervision and stepwisely to a carriage (4) which takes up a number of cylinders or tubes corresponding to one layer, whereupon the compensator (3) is stopped at its delivery station (38) while it runs farther on continuously at its loading station (37) and in that during the stoppage time at the delivery station the carriage (4) travels sideways and a pusher (8) pushes the tubes off the carriage transversely to its direction of movement and directly or indirectly into a carton (9) which is then lowered by the height of one layer of tubes while at the same time the pusher (8) is retracted and the carriage (4) travels back, whereupon the compensator (3) at the delivery station (38) starts to move again at increased speed.

2. A method of packing cylinders, cans, tubes or other cylinder-like parts arriving from a production plant (1) into cartons (9) in which the tubes or cylinders as they arrive are arranged in groups which correspond in each case to one layer in the carton which is to be packed, whereupon they are conveyed one after another to the filling aperture of the carton where they are pushed into the carton by a pusher, characterised in that the tubes or cylinders pass from the continuous feed means (1) into a compensator (3) from which, under optoelectronic supervision, they are delivered stepwisely onto at least one carriage (4) and are grouped according to the number for one layer, whereupon the compensator (3) is stopped at the delivery station (38) while it continues to run on at the loading station (37) and in that during the period for which the compensator is stopped on the delivery side the at least one loaded carriage (4) travels sideways while a further carriage arrives at the delivery station whereupon the compensator (3) at the delivery station (38) commences to move again at increased speed and in that a pusher (8) pushes the tubes off the first loaded carriage transversely to its direction of movement and directly or indirectly into a carton (9) which is then lowered by the height of one layer of tubes, while at the same time the pusher (8) is retracted and the emptied carriage (4) is retracted and remains in a waiting position until the filled second carriage travels sideways.

3. A method according to Claim 1 or 2, characterised in that the carriage (4) is moved in stepwise fashion in cadence with the incoming cylinders or tubes, whereby a forwards pushing command is given to the carriage drive (6) only when a cylinder or tube is present at the feed position.

4. A method according to Claim 1 or 2, characterised in that the number of positions to be filled on the carriage (4) and the lateral displacement movement of the carriage are ascertained according to the dictates of the carton dimensions and are affected by a programme control arrangement.

5. A method according to Claim 2, characterised in that in each case a carriage travels from the delivery station on an upper level and is unloaded and then travels back to the waiting position along a lower level.

6. A machine for carrying out the method according to one of Claims 1 or 2 with a compensator (3) which can be continuously loaded with cylinders or tubes and which delivers these intermittently to at least one conveyor means which conveys the cylinders or tubes into the region of a carton (9) where the cylinders or tubes are pushed into the carton in layers, characterised in that the compensator (3) comprises an endless chain (30) with pods (31) fixed thereon like gondolas, the chain (30) having two loops (35, 36), of which one (35) is disposed in the region between the delivery station (38) to the loading station (37) while the second loop (36) is disposed between the loading station (37) and the delivery station (38), and in that in the region between the second loop (36) and the delivery station (38) the chain (30) is passed around a drum (34) adapted to be braked as dictated by the carriage movement, while the chain (30) is on the loading side and in the area between the two loops (35, 36) driven by a motor (39) at a speed which is synchronised with the production line, and in that furthermore both loops (35, 36) are passed around respective guide rollers which are jointly disposed on a mobile frame (42) which can be retracted into its starting position by a braking unit (41) with an electrically operated coupling unit (40), and in that the conveyor means is at least one carriage (4) with a metal plate (44) interchangeably fixed thereon and having divisions (45) adapted to the size and number of tubes or cylinders to be conveyed, and in that the carriage (4) is adapted for reciprocating movement by means of a stepping motor (6) which operates under the control of an electronic control means (11).

7. A machine according to Claim 6, characterised in that upstream of the area in which the tubes or cylinders are transferred to the metal plate (44) on the carriage there is a photoelectric cell (46) which for each incoming tube or cylinder emits a switching and counting pulse to a programme circuit connected to the control means (11).

8. A machine according to Claim 6, characterised in that the interchangeable plate (44) with its subdivisions (45) is retained on the carriage (4) by at least two positioning pegs and by means of at least one fixing screw.

9. A machine according to Claim 6 for carrying out the method according to Claim 2, characterised in that two carriages are provided each of which are mounted at one side on one of two parallel rails and are provided with means of varying their height.

## Revendications

1. Procédé pour l'emballage dans des boîtes ou cartons (9) de tubes ou cartouches arrivant en continu d'une installation de production (1), lesdits tubes ou cartouches étant respectivement groupés conformément au nombre souhaité pour une couche et poussés dans la boite (9) par un poussoir (8), caractérisé en ce que, à partir de leur trajet de transport continu (1), les tubes ou cartouches parviennent tout d'abord dans un compensateur (3), duquel ils sortent au point de dépose (38) et sont déposés sous surveillance opto-électronique, en avançant pas à pas sur un chariot (4) qui saisit un nombre de tubes ou cartouches correspondant à une couche, après quoi le compensateur (3) s'immobilise à son point de dépose (38) tandis qu'il retourne de manière continue à son point de chargement (37), et en ce que pendant le temps d'immobilisation au point de dépose, le chariot (4) s'écarte latéralement et qu'un poussoir (8) pousse les tubes, directement ou indirectement, en les faisant sortir du chariot transversalement par rapport à la direction de son mouvement, dans une boite (9) qui est ensuite abaissée de la hauteur d'une couche de tubes, alors que simultanément le poussoir (8) et le chariot (4) reviennent à leur point de départ, après quoi, au point de dépose (38), le compensateur (3) reprend sa course à une vitesse plus élevée.

2. Procédé pour l'emballage dans des boîtes ou cartons (9) de tubes, cartouches, boîtes ou autres éléments cylindriques provenant en continu d'une installation de production (1), dans lequel les tubes ou cartouches qui arrivent sont ordonnés en groupes dont chacun correspond à une couche du carton ou boite d'emballage, après quoi ces groupes sont amenés successivement vers l'ouverture de remplissage de ladite boite et poussés dans celle-ci par un poussoir, caractérisé en ce que les tubes ou cartouches venant du trajet de transport continu (1) parviennent dans un compensateur (3) d'où, en avançant pas à pas sous surveillance opto-électronique, ils sont remis à au moins un chariot (4) et groupés en un nombre qui correspond à celui souhaité pour une couche, après quoi le compensateur (3) est immobilisé au point de dépose (38) tandis qu'il poursuit sa course continue au point de chargement (37), et en ce que pendant le temps d'immobilisation du côté dépose du compensateur, au moins un chariot chargé (4) s'écarte latéralement tandis qu'un autre chariot parvient au point de dépose, après quoi au point de dépose (38) le compensateur (3) reprend sa course à une vitesse plus élevée et en ce qu'un poussoir (8) pousse les tubes se trouvant sur le premier chariot chargé, directement ou indirectement, transversalement par rapport au sens de déplacement du chariot, dans une boite (9), qui est ensuite abaissée de la hauteur d'une couche de tubes, alors que simultanément le poussoir (8) est rétracté et le chariot vidé correspondant (4) revient à sa position de départ et reste dans une position d'attente jusqu'à ce que le deuxième chariot rempli s'écarte latéralement.

3. Procédé selon la revendication 1 ou 2, caractérisé en ce que le chariot (4) est déplacé pas à pas en cadence avec les tubes ou cartouches qui arrivent, le moteur (6) du chariot ne recevant l'ordre d'avancer qu'en cas de présence d'un tube sur la bande transporteuse.

4. Procédé selon la revendication 1 ou 2, caractérisé en ce que le nombre de places à remplir sur le chariot (4) et la course du déplacement latéral du chariot sont déterminés en fonction des dimensions des boites ou cartons d'emballage et soumis à une commande programmée.

5. Procédé selon la revendication 2, caractérisé en ce que, à chaque fois, un chariot s'écarte latéralement du point de dépose dans un plan supérieur où il est déchargé et revient vers sa position d'attente sur un plan inférieur.

6. Machine pour la mise en oeuvre du procédé selon l'une des revendications 1 ou 2, comportant un compensateur (3) qui peut être chargé de tubes ou cartouches de manière continue et qui remet ceux-ci de manière discontinue à au moins un moyen de transport, lequel amène lesdits tubes ou cartouches dans la zone d'une boîte (9) où les tubes ou cartouches sont poussés, par un poussoir (8), en couches successives dans ladite boîte, caractérisée en ce que le compensateur (3) présente une chaîne sans fin (30) comportant des godets (31) fixés à celle-ci à la manière de nacelles, la chaîne (30) ayant deux boucles (35, 36) dont l'une (35) est disposée dans la zone située entre le point de dépose (38) et le point de chargement (37) et l'autre boucle (36) entre le point de chargement (37) et le point de dépose (38), et en ce que dans la zone entre la deuxième boucle (36) et le point de dépose (38), la chaîne (30) passe autour d'un tambour (34) pouvant être freiné en fonction du mouvement du chariot, tandis que la chaîne (30) du côté de la charge dans la zone comprise entre les deux boucles (35, 36) est entraînée par un moteur (39) dont la vitesse est synchronisée à celle de la chaine de production, et en ce que, en outre, les deux boucles (35, 36) passent chacune autour d'une poulie de renvoi, lesquelles poulies sont disposées ensemble sur un cadre (42) mobile, qui peut être rétracté vers sa position initiale respective au moyen d'une unité de freinage (41) munie d'une unité de couplage électrique (40), et en ce que le moyen de transport est au moins un chariot (4) sur lequel est fixée de manière amovible une tôle (44), qui présente une division (45) ajustée au nombre et aux dimensions des tubes ou cartouches à transporter, et en ce que les mouvements d'aller et de retour du chariot (4) sont provoqués par un moteur pas à pas (6) dont le fonctionnement est piloté par une commande électronique (11).

7. Machine selon la revendication 6, caractérisée en ce que, avant la zone de transfert des tubes ou cartouches sur la tôle (44) du chariot, est disposée une cellule photo-électrique (46) qui, à l'arrivée de chaque tube ou cartouche , émet une impulsion de commande et de comptage vers un circuit de programmation relié à la commande (11).

8. Machine selon la revendication 6, caractérisée en ce que la tôle amovible (44) munie de la division (45) est maintenue sur le chariot (4) par au moins deux tiges de positionnement et au moyen d'au moins une vis de fixation.

9. Machines selon la revendication 6, pour la mise en oeuvre du procédé selon la revendication 2, caractérisées en ce qu'elles comprennent deux chariots dont chacun est monté sur un côté de l'un de deux rails parallèles et est muni de moyens permettant de faire varier sa hauteur.
